# EUROPEAN PATENT SPECIFICATION

(11) **EP 2 674 014 B1**
(45) Date of publication and mention of the grant of the patent: **19.06.2019**
(21) Application number: 11713364.5
(22) Date of filing: 11.03.2011
(51) Int. Cl.: H05B 37/02, G08B 13/19, G08B 29/24, G08B 29/04

(54) **AN OCCUPANCY SENSOR**
INSASSENSENSOR
CAPTEUR D'OCCUPATION

(30) Priority: 09.02.2011 US 201161440885 P
(43) Date of publication of application: 18.12.2013
(73) Proprietor: OSRAM GmbH, 80807 München (DE); OSRAM S.P.A. - SOCIETA' RIUNITE OSRAM EDISON CLERICI, 20126 Milano (IT)
(72) Inventor: MANNKE, Torsten, 84543 Winhoering (DE); HACKENBUCHNER, Stefan, 31100 Treviso (IT); CECCHETTI, Christian, 31036 Istrana (Treviso) (IT); BORTOT, Enrico, 31040 Volpago (Treviso) (IT); LIESS, Uwe, 80992 München (DE)
(74) Representative: Bosotti, Luciano
(86) International application number: PCT/IB2011/051037
(87) International publication number: WO 2012/107802

(56) References cited:
- EP-A1- 0 248 298
- WO-A1-2007/086018
- WO-A2-2004/001692
- JP-A- 6 144 727
- US-A- 4 942 385
- US-A- 5 077 548
- US-A1- 2005 128 067
- US-A1- 2007 159 235
- US-A1- 2010 039 094
- US-B1- 6 975 941

## Description

### Field of the invention

The disclosure relates to occupancy-based control techniques.

In various embodiments, the disclosure may relate to controlling lighting sources based on occupancy.

### Background

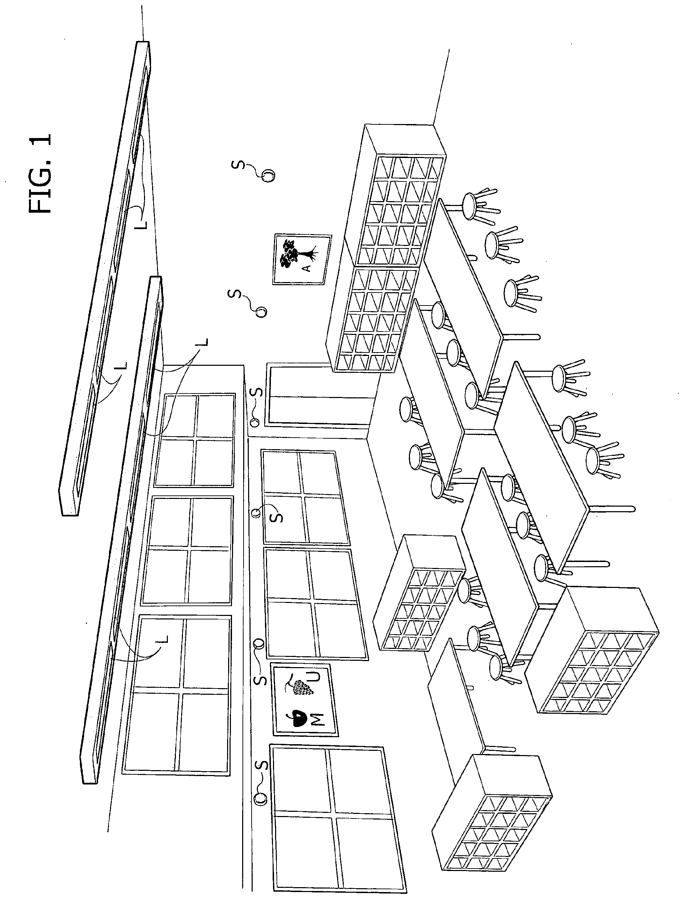

Systems for controlling lighting sources, e.g. luminaries L, installed in a space to be lighted e.g. a room in a school, kindergarten or the like (as schematically shown in figure 1) may include sensors S to detect occupancy of the space and cause the lighting source L to be activated e.g. without any manual intervention on switches or the like.

In such systems configured as wireless networks with multiple occupancy sensors S bound to the same actuated device (e.g. a luminaire or a group of luminaires or any other device to be activated as a function of occupancy), every single sensor S periodically reports its detected occupancy state (occupied/not occupied) to the actuated device. This means that state reports are sent even if there is no presence in the detection area which is a common condition in most practical cases.

On the one hand, this type of operation leads to high energy consumption on the sensor side, because transmitting and receiving usually is responsible for the largest part of the energy consumption in the energy budget of the sensor device. Especially for battery-powered devices this reduces significantly the battery lifetime.

On the other hand, it becomes quite complicated for the actuated device to handle two different states reported from different sensor devices.

For doing that, the actuated device has to be informed about the total number of sensors bound to it and which sensor device sent which state.

For example, a luminaire which has received a "not occupied" status report has to know if there are other sensor devices which might send "occupied" state reports.

The inventors have noted that these problems may be addressed by:
- using just a single actuator per network to transmit only status changes;
- using multiple sensors, which will then result in non-synchronized switching and confusion of the user;
- using more batteries or a permanent power supply;
- causing the sensor devices always to listen to the wireless traffic and modify (e.g. synchronize) their own state reports according to the state reports of the other devices (e.g. no "not occupied" reports are sent as long as the other devices are sending "occupied" ones); this may means that the radios of the sensor devices have to be switched on all the time and this again, may have a strong impact on power consumption.

Also, for handling different state reports from several devices the actuated device has to be informed about the total number of sensors bound to it and which sensor device sent which state; addressing this problem may require logic combinations (e.g. the actuated device such as e.g. a luminaire switches off only if all known sensor devices report a "not occupied" state): this requires a certain amount of memory in the actuated device, which is usually quite rare and also expensive.

Also, the inventors have noted that in wireless networks with battery-powered occupancy sensors, reducing the energy consumption of the sensor modules is essential for ensuring a long lifetime (e.g. several years for standard batteries may be desirable).

The inventors have similarly noted that the output voltage may decrease more than 30 percent over the lifetime of standard alkaline batteries, which has a strong impact on the power supply of the sensor and the circuit for signal conditioning which may be associated therewith.

In the case of battery-powered occupancy sensors using a PIR (Passive Infra Red) sensor or probe, a decreasing battery voltage may lead to an undesired increased sensitivity with the ensuing increased risk of wrong detections. This is due to the fact that in various embodiments the signal conditioning circuit(s) may derive the signal levels from the battery voltage.

The inventors have noted that this undesired effect might be avoided by using special batteries (e.g. lithium batteries, which may maintain their output voltage over most of their lifetime and exhibit a voltage drop only at the very end of their lifetime) or by using solar panels in possible conjunction with batteries to provide energy to the sensors.

Such arrangements are inevitably expensive and unpractical. More specifically, the invention relates to an occupancy sensor according to the preamble of claim 1, which is known e.g. from US 2007/159235 A1. Documents JP 6 144727 A, US 2010/0039094 A1 and WO 2007/086018 A1 are also of interest for the invention.

### Object and Summary

The invention has the object of overcoming the drawbacks of the solutions outlined previously.

According to the present invention, the above object is achieved thanks to the characteristics set forth in claim 1 that follows. The invention compensates the change in sensitivity of signal monitoring of the occupancy sensors due to decreasing battery voltage.

The claims form an integral part of the technical disclosure of the invention provided herein.

In certain embodiments, to reduce the radio on time, and therefore the power consumption, only the status "occupied" may be periodically transmitted over the air (i.e. as a radio signal, as may be the case in a wireless system) as long as the sensor device is detecting presence while in the "unoccupied" state nothing is transmitted.

In certain embodiments, in order to reduce energy consumption, a message is transmitted to the system only if presence (i.e. occupancy) is detected; otherwise there is no communication to the network.

In certain embodiments, the actuated device (directly or via some other permanently powered sensor data aggregation devices) listens to the sensors - and other control devices (e.g. switches and remote controls) bound to them - and have an own internal logic (e.g. retriggerable timer) to decide about turning on or off the load (e.g. lamps) depending on the received trigger signals ("occupied" state reports) and the status reports of the other control devices influencing the behavior.

In certain embodiments, the time between the "occupied" state reports of the sensor devices may be used to optimize energy consumption.

In certain embodiments, the actuated device may be additionally informed about the reporting interval (e.g. by a fixed configuration or, to be more flexible, as additional information together with the "occupied" state report) and may automatically react (e.g. by switching the light off) if the reporting interval is exceeded with no further status report received within the reporting interval from any device. In this case it does not matter if the status report was sent by a single sensor device or multiple sensor devices, because each received status report may just reset the timer which controls the reporting interval in the actuated device.

In certain embodiments, the actuated device will not have to be necessarily aware of the number and the individual status of each sensor device, because it will just automatically act as long as "occupied" state reports are received within the known reporting interval time and will react according to its application (e.g. switching off) if no state reports are received any more.

In certain embodiments, the actuated device may also listen to commands of manual control devices and override the sensor state reports according to them if necessary.

In certain embodiments, it will not be necessary for the sensor device to have the radio switched on all the time, as it will be enough to switch it on only when the reporting interval is exceeded and a presence has to be reported. For the rest of the time the device can be in low power mode with the radio switched off.

In certain embodiments, it will be enough for the sensor device to switch its radio on only when the reporting interval is exceeded and a presence has to be reported; for the rest of the time, the device can be in sleep mode.

In certain embodiments, in order to achieve a long battery lifetime the sensor (and primarily the microcontroller that may be included therein) may be in a sleep mode as long as no person is within the detection area.

In certain embodiments, a circuit which comprises the signal conditioning functions of the sensor may consume only a few microamperes and wake up the microcontroller as soon as presence is detected.

### Brief description of the annexed figures

The invention will now be now described, purely by way of non-limiting example, with reference to the annexed figures, wherein:
- Figure 1 has been already described in the foregoing;
- Figure 2 is a time diagram showing signals generated in certain embodiments; and
- Figures 3 and 4 are block diagrams of occupancy sensors.

### Detailed description

In the following description numerous specific details are given to provide a thorough understanding of embodiments. The embodiments can be practiced without one or more of the specific details, or with other methods, components, materials, etc. In other instances, well-known structures, materials, or operations are not shown or described in detail in order to avoid obscuring aspects of the embodiments.

Reference throughout this specification to "one embodiment" means that a particular feature, structure, or characteristic described in connection with the embodiment is included in at least one embodiment. Thus, the appearances of the phrase "in certain embodiments", in various places throughout this specification are not necessarily all referring to the same embodiments. Furthermore, the particular features, structures or characteristics may be combined in any suitable manner in one or more embodiments.

The headings provided herein are for convenience only and do not interpret the scope or meaning of the embodiments.

As already indicated, Figure 1 is schematically representative of an occupancy-based control system, in the exemplary form of a system for controlling a lighting source, e.g. one or more luminaries L, installed in a space to be lighted e.g. a room in a school, kindergarten or the like. The system includes a plurality of sensors S to detect occupancy of the space and cause the lighting source L to be actuated.

The exemplary system illustrated in Figure 1 is configured as wireless network with multiple occupancy sensors S bound to the same actuated device (e.g. a lighting source L such as a luminaire or a group of luminaires or any other device to be activated as a function of occupancy). Activation of the controlled device may be either directly or via some other permanently powered sensor data aggregation device, i.e. a device adapted to collect the signals from the (e.g. battery operated) sensors S and to activate/deactivate the controlled device accordingly.

Save for what will be described in the following, the general layout and operation of the system including the actuated device (e.g. a lighting source L) and the occupancy sensors S is conventional in the art, thus making it unnecessary to provide a more detailed description herein.

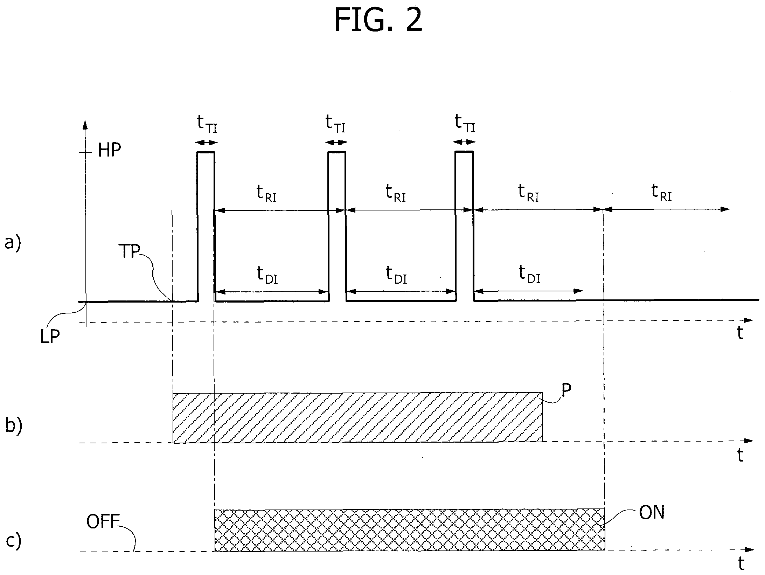

Figure 2, including three portions designated a), b), and c), respectively, is a time diagram showing, over a common time scale t:
- an exemplary output signal emitted by any of the sensors S (portion a);
- the presence P of a person (i.e. the occupancy) detected by the sensor in question (portion b); and
- the activation(ON)/de-activation(OFF) of the device (e.g. a lighting source such as e.g. one or more luminaries) actuated i.e. controlled by the system.

The output signal emitted by the sensor(s) varies between a low power level LP and a high power level HP.

The representation of Figure 2 assumes that the output signal is at the low power level LP when a "presence" P (i.e. an occupancy) is detected at a time TP.

As a result of this, the sensor switches for a time frame t_{TI} to high power mode (radio turned on) in which the sensor connects to the network to get in contact with the actuated device L (or its bound actuators) to send its "occupied" state reports and then returns to the low power level LP.

In Figure 2, t_{DI} denotes the time between two high power node time frames t_{TI} in which the sensor device is in low power mode LP (radio turned off). In this mode the device may be running its application for detecting presence or being asleep.

Finally, in Figure 2, t_{RI} denotes the time frame between two "occupied" state reports. An internal timer associated with the actuated device (e.g. the lighting source) is set to this value after having received an "occupied" state report. If another "occupied" status report is received within this time the timer is reset to t_{RI}. If no "occupied" status report is received within that time span the actuator will switch off its load.

It will be appreciated that neither the power consumption nor the time line is scaled. In reality the time t_{TI} for transmitting and receiving will be generally much shorter in comparison with t_{DI}.

Also the difference between "low power mode" LP and "high power mode" HP will be relatively much larger than the difference between the base line and "low power modes".

In the exemplary embodiments considered herein:
- the state reports are not sent periodically in general, but only the "occupied" state is transmitted if some presence P is detected and this report is sent periodically only as long as the state does not change to unoccupied;
- additionally, the acting device may be informed about the reporting interval (e.g. by a fixed configuration) and automatically react (e.g. by switching the light off) if the reporting interval is exceeded and no further status report has been received within the reporting interval from any device: in this case, it does not matter if the status report was sent by a single sensor device or multiple sensor devices, because every received status report just resets the timer which controls the reporting interval in the acting device.

As a result, in the exemplary embodiments considered herein, it is not necessary for the activated device L to be aware of all sensor devices S , because it will just automatically act as long as "occupied" state reports are received within the known reporting interval time and react according to its application (e.g. switching off) if no state reports are received anymore. Consequently, it will not be necessary for the sensor device to have the radio switched on all the time.

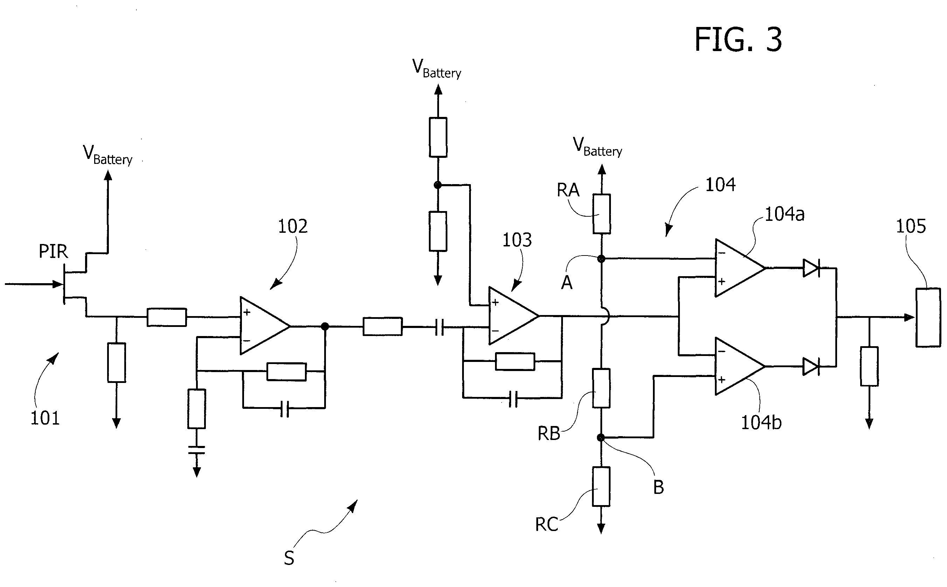

The block diagram of Figure 3 is representative of an occupancy sensor S using a sensitive element 101 - of any known type, e.g. a PIR (Passive Infra Red) sensor or probe.

The signal produced thereby (which may be indicative of occupancy, e.g. the presence of one or more persons in the detection area covered by the sensor S) may be amplified and filtered by two or more cascaded amplifier stages 102, 103.

The resulting signal thus possibly conditioned is fed to a window comparator 104 including two comparator elements such as e.g. operational amplifiers 104a, 104b defining upper and lower thresholds or limits, respectively. When the signal fed to the comparator 104 reaches a certain upper or lower threshold level, the output of the window comparator 104 changes from low to high and may "wake up" the circuitry (e.g. a microcontroller) 105 of the sensor which was previously in "sleep" mode, with reduced consumption.

Certain embodiments may adopt such a window comparator (that is two thresholds) as the probe 101 may provide, when no movement is detected, a constant output voltage lying between the upper and lower levels thresholds of the window comparator and react only to a change of the infrared radiation.

For instance, the probe 101 may include a lens with several facets which project the infrared radiation on the sensing surface: when a person moves from the area covered by one facet to the area covered by another facet, the infrared radiation onto the sensor surface changes and the sensor signal increases or decreases (depending on the direction of the movement); consequently, the signal (which is between the upper and lower level of the window comparator when no movement is detected) may go up (and exceed the upper level) or down (und go below the lower level). In certain embodiments, the signal-conditioning circuitry (e.g. 102, 103) may amplify only this change of the sensor output voltage.

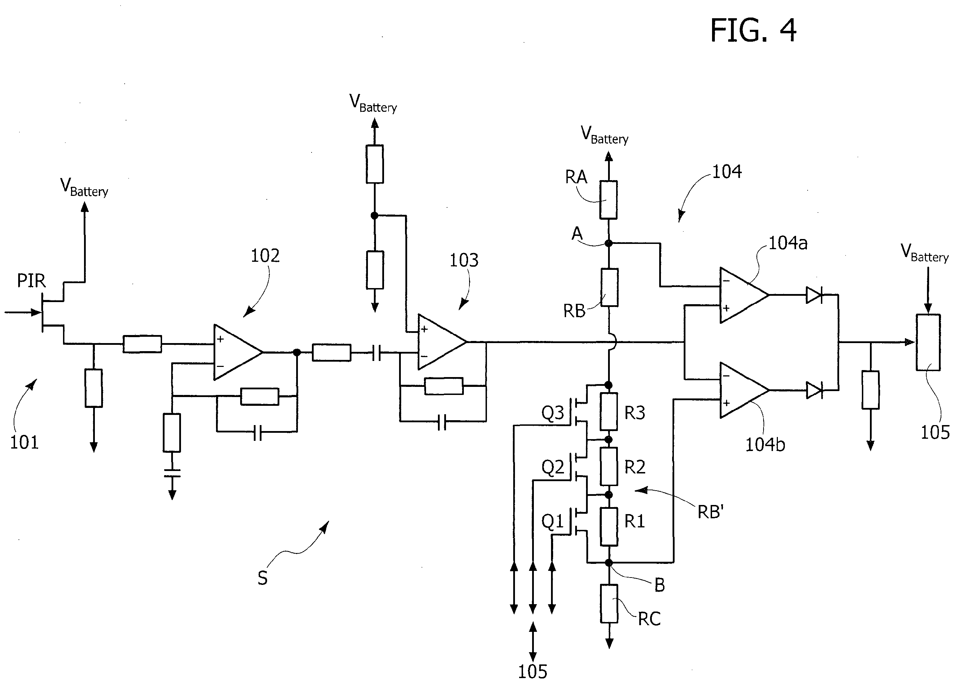

A basic concept underlying the exemplary embodiment of Figure 3 (and similarly of Figure 4) is having a voltage divider which defines at least one comparison value against which the signal produced by the sensor or probe 101 (as possibly conditioned by the stages 102 and 103) is compared to detect presence/occupancy in the detection area of the sensor S.

In the exemplary embodiment of Figure 3, the voltage divider interposed between the power voltage (V_{Battery}) and ground includes first, second and third resistors RA, RB, RC in series.

The intermediate point A between the first and second resistors RA and RB is connected to the inverting input of the op-amp 104a and thus defines the upper threshold or limit of the detection window of the comparator 104.

The intermediate point B between the second and third resistors RB and RC is connected to the non-inverting input of the op-amp 104b and thus defines the lower threshold or limit of the detection window of the comparator 104.

This means that the voltage divider RA, RB, RC defines at least one comparison value against which the signal produced by the sensor or probe 101 (as possibly conditioned by the stages 102 and 103) is compared to detect presence/occupancy in the detection area of the sensor S and correspondingly wake-up the transmitting part of the sensor (i.e. the microcontroller 105).

In such a sensor S, when battery powered (i.e. with the various elements 101, 102, 103 and - primarily 104 - fed with a voltage V_{Battery} - derived from one or more batteries) a decreasing battery voltage V_{battery} may lead to an undesired increased sensitivity with the ensuing increased risk of wrong detections.

This effect is largely independent of a number of factors, such as e.g.:
- the type of the sensor element 101,
- the specific circuit layout of the stages 102, 103, and
- the specific arrangement of the elements defining the comparison value or values of the comparator 104.

The following disclosure provided in connection with figure 4 will thus also apply e.g. to sensor elements 101 other than a PIR probe, as well as to conditioning stages 102, 103 (if present) and a comparator 104 having a layout different from the one exemplified in Figures 3 and 4.

In that respect, parts and components which are identical or equivalent are indicated with the same references in both figures 3 and 4; for the sake of brevity, the relative description already provided in connection with Figure 3 will not be repeated in connection with Figure 4.

In the exemplary embodiment of Figure 4, before being fed to the comparator 104, the signal from the sensor 101 (e.g. PIR) is passed through the stages 102 and 103 for conditioning before being fed to the comparator 104. The comparator 104 monitors the signal and wakes up the microcontroller 105 as soon as movement is detected.

The microcontroller 105 sends a RF message to the wireless network (e.g. to switch on the light source L with a message to the network to switch on the light source for a certain time Tₒₙ) and returns to the sleep mode immediately thereafter. In certain embodiments, the possibility for the microcontroller 105 to wake-up may be inhibited, that is de-activated, for a certain off-time (e.g. 2 seconds).

When in the sleep mode (and not possibly temporarily inhibited) the microcontroller 105 can be woken-up again by the sensor.

In certain embodiments, the microcontroller 105 may be configured so that, whenever woken-up by the sensor, the microcontroller 105 checks if the end of the time period Tₒₙ is reached, and in that case the message "light on for Tₒₙ" may be renewed.

The exemplary embodiment considered herein may be adapted to operate with standard alkaline batteries having an output voltage which decreases (e.g. linearly) during the battery lifetime. This may result i.a. into a corresponding change (e.g. decrease) in the width of the detection window of the comparator 104, with the ensuing drawbacks already discussed in the foregoing (increased sensitivity, increased risk of wrong detections).

In certain embodiments, this undesired effect may be compensated by causing the resistance RB between the points A and B (see Figure 3) to be replaced or supplemented (as depicted in Figure 4) by a set of resistors R1, R3, R3, ... , Rn having associated electronic switches Q1, Q2, Q3 ..., Qn (such as e.g. MOSFETs) controlled e.g. by the micro controller 105. In the exemplary embodiment illustrated in Figure 4, n=3.

When "on" (i.e. conductive), each switch Q1, Q2, Q3, ... will short-circuit the respective resistor R1, R3, R3, ... thus yielding a zero resistance. When "off" (i.e. non-conductive), each switch Q1, Q2, Q3, ... will permit the respective resistor R1, R3, R3, ... to add a non-zero resistance value to the resistance between the points A and B.

In the exemplary embodiment considered, "digitally" (i.e. on/off) activating an increasing number of the resistors R1, R3, R3, ... will cause the voltage at A to increase and the voltage at B to decrease, with a consequent effect on the width the detection window of the comparator 104 in order to compensate for the change (e.g. decrease) in the detection window width due to the change (e.g. decrease) in the battery voltage V_{battery}.

The exemplary embodiment considered will minimize current (i.e. power) absorption since electronic switches Q1, Q2, Q3,... such a MOSFETs will exhibit a current absorption in the range of microamperes.

Also, in certain embodiments, selecting resistance values as R1=R, R2=2R, R3=4R, ..., Rn=R2^(n-1) - that is with resistance values arranged in an increasing series of powers of two - will permit to control the detection window with 2^n equidistant levels.

In certain embodiments, switching (i.e. selectively turning on and off) the switches Q1, Q2, Q3,... may be controlled by the microcontroller 105.

In order to do so, the microcontroller 105 may sense the voltage V_{battery} either directly (as depicted in Figure 4) or indirectly (e.g. by sensing a voltage at a point of the divider at the input of the comparator 104) and act on the switches Q1, Q2, Q3,... to maintain the voltage drop between A and B (substantially) constant.

In certain embodiments, a simple procedure to do this may involve activating the resistors R1, R2, R3 in such a way that the sum of the resistance values of the resistors activates gradually increases as the voltage V_{battery} decreases.

A concept underlying the exemplary embodiment of Figure 4 can thus be summarized as involving two basic steps:
- detecting any changes (e.g. a decrease) in the voltage (e.g. V_{battery}) which powers the sensor S, and
- acting on a voltage divider which defines at least one comparison value of a comparator against which the signal produced by the occupancy sensor or probe is compared in order to keep the at least one comparison value substantially constant, thus countering any changes induced thereon by a change (e.g. a decrease) in the voltage which powers the sensor S.

In certain embodiments (such as exemplified in figure 4) the signal produced by the occupancy probe 101 is compared against a comparison value given by the width of a window (i.e. between an upper and a lower threshold). Any changes (e.g. a decrease) in the voltage which powers the sensor S being detected may lead to acting on the voltage divider (RA, RB, R1, R2, R3, RC) in order to keep the width of said window substantially constant.

Of course, without prejudice to the underlying principles of the invention, the details of construction and the embodiments may vary, even significantly, with respect to what is described and illustrated herein, without thereby departing from the scope of the invention, as defined by the annexed claims.

## Claims

1. A battery-powered occupancy sensor (S) configured to be fed with a feed voltage (V_{battery}) from a battery, the battery-powered occupancy sensor (S) including:
- a sensing probe (101) configured to detect occupancy (P) of a space monitored by the sensor (S) and produce a corresponding sensing signal,
- a comparator (104) including a voltage divider (RA, RB, R1, R2, R3, RC) interposed between said feed voltage (V_{battery}) and ground, wherein said voltage divider (RA, RB, R1, R2, R3, RC) is configured to define a comparison value (A, B), wherein said comparator (104) is configured to compare said sensing signal against said comparison value (A, B) to detect said occupancy, and wherein said voltage divider (RA, RB, R1, R2, R3, RC) includes a plurality of resistors (RA, RB, R1, R2, R3, RC), said plurality of resistors including at least one switchable resistor (R1, R2, R3), each switchable resistor (R1, R2, R3) being coupled to an associated electronic switch (Q1, Q2, Q3), and
- a controller (105) configured to be selectively switched to an active state when comparison of said sensing signal against said comparison value (A, B) in said comparator (104) indicates that occupancy is detected by said sensing probe (101),
whereby changes in said feed voltage (V_{battery}) induce a change in said comparison value (A, B), **characterized in that** said controller (105) is configured to:
- sense said feed voltage (V_{battery}) applied to the sensor (S),
- detect changes in said feed voltage (V_{battery}), and
- in response to said detected changes, selectively switch said at least one switchable resistor (R1, R2, R3) by said associated electronic switch (Q1, Q2, Q3) to keep said comparison value (A, B) substantially constant, thus countering changes induced in said comparison value (A, B) by changes in said feed voltage (V_{battery}) .

2. The battery-powered occupancy sensor of claim 1, wherein said voltage divider (RA, RB, R1, R2, R3, RC) is configured to define a comparison window for said sensing signal, said comparison window having a width between an upper threshold (A) and a lower threshold (B), wherein said controller (105) is configured to selectively switch said at least one switchable resistor (R1, R2, R3) by said associated electronic switch (Q1, Q2, Q3) to counter changes in the width of said comparison window (A, B) induced by changes in said feed voltage (V_{battery}) .

3. The battery-powered occupancy sensor of claim 1 or claim 2, including a plurality of electronic switches (Q1, Q2, Q3), wherein each electronic switch (Q1, Q2, Q3) is switcheable to an active state to short-circuit a respective switchable resistor (R1, R2, R3) of said voltage divider (RA, RB, R1, R2, R3, RC).

4. The battery-powered occupancy sensor of claim 3, wherein the resistance values of said respective switchable resistors (R1, R2, R3) are arranged in an increasing series of powers of two.

5. The battery-powered occupancy sensor of claim 3 or claim 4, wherein said controller (105) is configured to selectively switch said respective switchable resistors (R1, R2, R3) by said associated electronic switch (Q1, Q2, Q3) to cause the sum of the resistance values of the resistors activated by said switching to gradually increase as said feed voltage (V_{battery}) decreases.

6. The battery-powered occupancy sensor of claim 1, wherein said electronic switch (Q1, Q2, Q3) includes a MOSFET.

7. The battery-powered occupancy sensor of claim 1, further comprising a radio transmitter, wherein said controller (105) is coupled to said radio transmitter and configured to send a RF message when occupancy is detected by said sensing probe (101).

8. The battery-powered occupancy sensor of claim 7, wherein said controller (105) is configured to return to a sleep mode after sending said RF message.

9. The battery-powered occupancy sensor of claim 8, wherein said controller (105) is configured to be inhibited from switching to said active state for a given interval after returning to said sleep mode.

10. The battery-powered occupancy sensor of any of the previous claims, wherein said sensing probe (101) is a Passive Infra Red, PIR, sensing probe.

11. The battery-powered occupancy sensor of any of the previous claims, including conditioning circuitry (102, 103) for said sensing signal, wherein said conditioning circuitry (102, 103) is provided between said sensing probe (101) and said comparator (104).

## Patentansprüche

1. Ein batteriegetriebener Belegungssensor (S), der ausgelegt ist, um mit einer Versorgungsspannung (V_{battery}) von einer Batterie versorgt zu werden, der batteriegetriebene Belegungssensor (S) umfassend:
- Ein Messfühler (101), der ausgelegt ist, um die Belegung (P) von einem Raum, der von dem Sensor überwacht wird, zu erkennen und ein entsprechendes Abtastsignal zu erzeugen,
- Eine Vergleichseinrichtung (104), die einen Spannungsteiler (RA, RB, R1, R2, R3, RC) beinhaltet, der zwischen der Versorgungsspannung (V_{battery}) und Erde geschaltet ist, wobei besagter Spannungsteiler (RA, RB, R1, R2, R3, RC) ausgelegt ist, um einen Vergleichswert (A, B) zu bestimmen, wobei besagte Vergleichseinrichtung (104) ausgelegt ist, um besagtes Abtastsignal gegen besagten Vergleichswert (A, B) zu vergleichen, um besagte Belegung zu erkennen, und wobei besagter Spannungsteiler (RA, RB, R1, R2, R3, RC) eine Vielzahl von Widerständen (RA, RB, R1, R2, R3, RC) beinhaltet, besagte Vielzahl von Widerständen (RA, RB, R1, R2, R3, RC) mindestens einen schaltbaren Widerstand (R1, R2, R3) beinhaltet, jeder schaltbare Widerstand (R1, R2, R3) mit einem zugewiesenen elektronischen Schalter (Q1, Q2, Q3) gekoppelt ist, und
- Eine Steuerung (105), die ausgelegt ist, um wahlweise in einen aktiven Zustand geschaltet zu werden, wenn Vergleich von besagtem Abtastsignal gegen besagten Vergleichswert (A, B) in besagter Vergleichseinrichtung (104) anzeigt, dass Belegung von besagtem Messfühler (101) erkannt ist,
wobei Änderungen in besagter Versorgungsspannung (V_{battery}) eine Veränderung in besagtem Vergleichswert (A, B) induzieren, **gekennzeichnet dadurch, dass** besagte Steuerung (105) ausgelegt ist, um:
- Besagte Versorgungsspannung (V_{battery}), die am Sensor (S) angelegt ist, abzutasten,
- Veränderungen in besagter Versorgungsspannung (V_{battery}) zu erkennen, und
- In Antwort auf besagte Veränderungen, wahlweise mindestens einen schaltbaren Widerstand (R1, R2, R3) durch besagten elektronischen Schalter (Q1, Q2, Q3) zu schalten, um besagten Vergleichswert (A, B) wesentlich konstant zu halten, folglich Veränderungen, die in besagtem Vergleichswert (A, B) durch Veränderungen in besagter Versorgungsspannung (V_{battery}) induziert werden , entgegenzuwirken.

2. Der batteriegetriebene Belegungssensor nach Anspruch 1, wobei besagter Spannungsteiler (RA, RB, R1, R2, R3, RC) ausgelegt ist, um ein Vergleichsfenster für besagtes Abtastsignal zu bestimmen, wobei besagtes Vergleichsfenster eine Breite zwischen einem oberen Schwellenwert (A) und einem unteren Schwellenwert (B) hat, wobei besagte Steuerung (105) ausgelegt ist, um wahlweise mindestens einen schaltbaren Widerstand (R1, R2, R3) durch zugewiesenen elektronischen Schalter (Q1, Q2, Q3) zu schalten, um Veränderungen in der Breite von besagtem Vergleichsfenster (A, B), die durch Veränderungen in besagter Versorgungsspannung (V_{battery}) induziert werden, entgegenzuwirken.

3. Der batteriegetriebene Belegungssensor nach Anspruch 1 oder Anspruch 2, der eine Vielzahl von elektronischen Schaltern (Q1, Q2, Q3) beinhaltet, wobei jeder elektronische Schalter (Q1, Q2, Q3) in einen aktiven Zustand schaltbar ist, um einen jeweiligen schaltbaren Widerstand (R1, R2, R3) von besagtem Spannungsteiler (RA, RB, R1, R2, R3, RC) kurzzuschließen.

4. Der batteriegetriebene Belegungssensor nach Anspruch 3, wobei die Widerstandswerte von besagten schaltbaren Widerständen (R1, R2, R3) in einer aufsteigenden Reihe von Zweierpotenzen angeordnet sind.

5. Der batteriegetriebene Belegungssensor nach Anspruch 3 oder Anspruch 4, wobei besagte Steuerung (105) ausgelegt ist, um wahlweise besagte jeweilige schaltbare Widerstände (R1, R2, R3) durch besagte zugewiesene elektronische Schalter (Q1, Q2, Q3) zu schalten, um die Summe der Widerstandswerte von den Widerständen, die durch besagtes Schalten aktiviert wurden, schrittweise ansteigen zu lassen während besagte Versorgungsspannung (V_{battery}) abnimmt.

6. Der batteriegetriebene Belegungssensor nach Anspruch 1, wobei besagter elektronischer Schalter (Q1, Q2, Q3) einen MOSFET beinhaltet.

7. Der batteriegetriebene Belegungssensor nach Anspruch 1, weiter umfassend ein Funkübertragungsgerät, wobei besagte Steuerung (105) mit besagtem Funkübertragungsgerät gekoppelt ist und ausgelegt ist, um eine RF Nachricht zu senden, wenn Belegung durch besagten Messfühler (101) erkannt wird.

8. Der batteriegetriebene Belegungssensor nach Anspruch 7, wobei besagte Steuerung (105) ausgelegt ist, in einen Schlafmodus nach Senden besagter RF Nachricht zurückzukehren.

9. Der batteriegetriebene Belegungssensor nach Anspruch 8, wobei besagte Steuerung (105) ausgelegt ist, um vom Schalten in besagten aktiven Zustand für ein gegebenes Intervall nach Zurückkehren in besagten Schlafmodus gehindert zu werden.

10. Der batteriegetriebene Belegungssensor nach einem der vorhergehenden Ansprüche, wobei besagter Messfühler (101) ein passiver Infrarot, PIR, Messfühler ist.

11. Der batteriegetriebene Belegungssensor nach einem der vorhergehenden Ansprüche beinhaltend, einen Aufbereitungsschaltkreis (102, 103) für besagtes Abtastsignal, wobei besagter Aufbereitungsschaltkreis (102, 103) zwischen besagtem Messfühler (101) und besagter Vergleichseinrichtung (104) zur Verfügung gestellt wird.

## Revendications

1. Un capteur de présence (S) fonctionnant sur batterie configuré pour être alimenté par une tension d'alimentation (V_{battery}) provenant d'une batterie, le capteur de présence (S) fonctionnant sur batterie comprenant :
- une sonde de capteur (101) configurée pour détecter une présence (P) dans un volume surveillé par le capteur (S) et pour produire un signal de capteur correspondant,
- un comparateur (104) comprenant un diviseur de tension (RA, RB, R1, R2, R3, RC) interposé entre ladite tension d'alimentation (V_{battery}) et la masse, ledit diviseur de tension (RA, RB, R1, R2, R3, RC) étant configuré pour définir une valeur de comparaison (A, B), ledit comparateur (104) étant configuré pour comparer ledit signal de capteur par rapport à ladite valeur de comparaison (A, B) pour détecter ladite présence, et ledit diviseur de tension (RA, RB, R1, R2, R3, RC) incluant une pluralité de résistances (RA, RB, R1, R2, R3, RC), ladite pluralité de résistances comprenant au moins une résistance commutable (R1, R2, R3), chaque résistance commutable (R1, R2, R3) étant couplée à un commutateur électronique associé (Q1, Q2, Q3), et
- un contrôleur (105) configuré pour être sélectivement commuté sur un état actif lorsque la comparaison dudit signal de capteur par rapport à ladite valeur de comparaison (A, B) dans ledit comparateur (104) indique qu'une présence est détectée par ladite sonde de capteur (101),
de sorte que des modifications de ladite tension d'alimentation (V_{battery}) induisent une modification de ladite valeur de comparaison (A, B),
**caractérisé en ce que** ledit contrôleur (105) est configuré pour :
- détecter ladite tension d'alimentation (V_{battery}) appliquée au capteur (S),
- détecter des modifications de ladite tension d'alimentation (V_{battery}), et
- en réponse auxdites modifications détectées, commuter sélectivement ladite au moins une résistance commutable (R1, R2, R3) par ledit commutateur électronique associé (Q1, Q2, Q3) pour maintenir ladite valeur de comparaison (A, B) substantiellement constante, en compensant ainsi les modifications induites dans ladite valeur de comparaison (A, B) par les modifications de ladite tension d'alimentation (V_{battery}) .

2. Le capteur de présence fonctionnant sur batterie de la revendication 1, dans lequel ledit diviseur de tension (RA, RB, R1, R2, R3, RC) est configuré pour définir une fenêtre de comparaison pour ledit signal de capteur, ladite fenêtre de comparaison ayant une largeur comprise entre un seuil supérieur (A) et un seuil inférieur (B), ledit contrôleur (105) étant configuré pour commuter sélectivement ladite au moins une résistance commutable (R1, R2, R3) par ledit commutateur électronique associé (Q1, Q2, Q3) pour compenser les modifications de la largeur de ladite fenêtre de comparaison (A, B) induite par les modifications de ladite tension d'alimentation (V_{battery}) .

3. Le capteur de présence fonctionnant sur batterie de la revendication 1 ou de la revendication 2, comprenant une pluralité de commutateurs électroniques (Q1, Q2, Q3), chaque commutateur électronique (Q1, Q2, Q3) étant commutable sur un état actif pour court-circuiter une résistance commutable respective (R1, R2, R3) dudit diviseur de tension (RA, RB, R1, R2, R3, RC).

4. Le capteur de présence fonctionnant sur batterie de la revendication 3, dans lequel les valeurs de résistance desdites résistances commutables respectives (R1, R2, R3) sont agencées en une série croissante de puissances de deux.

5. Le capteur de présence fonctionnant sur batterie de la revendication 3 ou de la revendication 4, dans lequel ledit contrôleur (105) est configuré pour commuter sélectivement lesdites résistances commutables respectives (R1, R2, R3) par ledit commutateur électronique associé (Q1, Q2, Q3) pour faire en sorte que la somme des valeurs de résistance des résistances activées par ladite commutation augmente progressivement au fur et à mesure que diminue ladite tension d'alimentation (V_{battery}) .

6. Le capteur de présence fonctionnant sur batterie de la revendication 1, dans lequel ledit commutateur électronique (Q1, Q2, Q3) comprend un MOSFET.

7. Le capteur de présence fonctionnant sur batterie de la revendication 1, comprenant en outre un émetteur radio, ledit contrôleur (105) étant couplé audit émetteur radio et étant configuré pour envoyer un message RF lorsqu'une présence est détectée par ladite sonde de détection (101) .

8. Le capteur de présence fonctionnant sur batterie de la revendication 7, dans lequel ledit contrôleur (105) est configuré pour revenir à un mode de sommeil après envoi dudit message RF.

9. Le capteur de présence fonctionnant sur batterie de la revendication 8, dans lequel ledit contrôleur (105) est configuré pour que sa commutation sur l'état actif soit inhibée pendant un intervalle donné après retour audit mode de sommeil.

10. Le capteur de présence fonctionnant sur batterie de l'une des revendications précédentes, dans lequel ladite sonde de détection (101) est une sonde de détection passive de l'infrarouge, PIR.

11. Le capteur de présence fonctionnant sur batterie de l'une des revendications précédentes, comprenant une circuiterie de conditionnement (102, 103) pour ledit signal de capteur, ladite circuiterie de conditionnement (102, 103) étant montée entre ladite sonde de détection (101) et ledit comparateur (104).
